# FASCICULE DE BREVET EUROPEEN

(11) **EP 4 515 851 B1**
(45) Date de publication et mention de la délivrance du brevet: **09.09.2026**
(21) Numéro de dépôt: 23714251.8
(22) Date de dépôt: 17.03.2023
(51) Int. Cl.: H04L 67/52, G06Q 10/08, H04W 4/02, H04W 4/40

(54) **PROCÉDÉ ET DISPOSITIF DE CONTRÔLES NUMÉRIQUES DE LA LIVRAISON D'UN OBJET D'UN PREMIER VÉHICULE À UN DEUXIÈME VÉHICULE**
VERFAHREN UND VORRICHTUNG ZUR DIGITALEN STEUERUNG DER ABGABE EINES OBJEKTS VON EINEM ERSTEN FAHRZEUG ZU EINEM ZWEITEN FAHRZEUG
METHOD AND DEVICE FOR DIGITALLY CONTROLLING THE DELIVERY OF AN OBJECT FROM A FIRST VEHICLE TO A SECOND VEHICLE

(30) Priorité: 28.04.2022 FR 2203975
(43) Date de publication de la demande: 05.03.2025
(73) Titulaire: Stellantis Auto SAS, 78300 Poissy (FR)
(72) Inventeur: DELPORTE, Denis Albert, 59267 PROVILLE (FR); HAROUN, Amir, 78955 CARRIERES SOUS POISSY (FR); BOUCHAUD, Laurent, 92500 RUEIL MALMAISON (FR); BARRE, Laurent, 75011 PARIS (FR); DUVERGER, Pascal, 78590 NOISY LE ROI (FR)
(74) Mandataire: ESIP
(86) Numéro de dépôt international: PCT/FR2023/050375
(87) Numéro de publication internationale: WO 2023/209302

(56) Documents cités:
- WO-A1-2019/035136
- US-B2- 9 821 768

## Description

La présente invention revendique la priorité de la demande française 2203975 déposée le 28.04.2022.

### Domaine technique

La présente invention concerne les procédés, dispositifs et système de contrôles numériques de livraison d'un objet d'un premier véhicule à un deuxième véhicule. La présente invention concerne également la communication de données mémorisées sur une radio-étiquette d'identification de l'objet à livrer pour le suivi de la livraison d'un premier véhicule vers un deuxième véhicule.

### Arrière-plan technologique

La livraison d'objets ou de colis est une activité qui demande une traçabilité de ces objets ou colis tout au long de leur livraison. Pour cela, une étiquette d'identification est habituellement apposée sur ces objets ou colis. Cette étiquette d'identification comporte des données relatives à l'objet ou le colis auquel elle est associée.

Des étiquettes d'identification de type à communication par champs proches (de l'anglais Radio Frequency Identification, en français identification radio fréquence), appelées radio-étiquettes, sont souvent utilisées car elles permettent à un opérateur de lire les données mémorisées sur ces étiquettes d'identification en approchant un lecteur de ces étiquettes.

La livraison d'un objet ou d'un colis dans un véhicule destinataire nécessite aujourd'hui que le livreur ait accès au véhicule destinataire de l'objet ou du colis, par exemple au coffre du véhicule qui dispose d'un accès séparé du reste du véhicule ou à une malle extérieure fixée sur le véhicule destinataire. Cela nécessite par exemple que le livreur dispose de la clé physique si le coffre ou la malle sont verrouillés par une serrure à clé physique ou d'un code permettant de déverrouiller le coffre ou la malle si le coffre ou la malle sont verrouillées par une serrure à code.

La transmission de la clé physique ou du code sont complexes à mettre en œuvre et entraine un risque de vol de la clé ou du code lors de la transmission. Par ailleurs, ce type de solution nécessite de prévoir un accès particulier au coffre ou à la malle du véhicule destinataire, notamment lorsque ce dernier transporte des objets de valeur, pour éviter que le livreur de l'objet ou du colis n'ait accès à ces objets de valeurs déjà présents dans le coffre ou la malle lors de la livraison.

La livraison d'un objet ou d'un colis dans le coffre ou une malle d'un véhicule destinataire peut aussi se faire par ouverture à distance de ce coffre ou malle. Toutefois, les dispositifs actuels posent divers problèmes tels que la perte de données lors du cheminement du colis, le contournement des procédures de livraison par les livreurs ou encore l'absence de preuve des entrées/sorties colis, dans le dernier kilomètre.

Les applications actuelles de gestion de flotte assurent la géolocalisation du véhicule, et non pas le lien à une livraison sécurisée du colis dans un véhicule client.

Le suivi de la livraison d'un objet depuis un premier véhicule vers un deuxième véhicule est ainsi incomplet et la livraison requière des aménagements particuliers des véhicules, notamment du véhicule destinataire. Les documents WO2019/035136 et US9821768 font partie de l'état de la technique.

### Résumé de la présente invention

Un objet de la présente invention est de résoudre au moins un des inconvénients de l'arrière-plan technologique.

Un autre objet de la présente invention est d'améliorer le suivi de livraison d'objets entre véhicules.

Selon un premier aspect, la présente invention concerne un procédé de contrôles numériques de livraison d'un objet d'un premier véhicule à un deuxième véhicule ledit procédé, ledit procédé étant mis en œuvre par un dispositif distant desdits premier et deuxième véhicules et comprenant les étapes suivantes : réception de premières données représentatives d'identification dudit premier véhicule, de deuxièmes données représentatives dudit objet et de troisièmes données comprenant une première information représentative de géolocalisation dudit premier véhicule et une deuxième information représentative d'un instant temporel auquel ledit objet est sorti dudit premier véhicule, lesdites deuxièmes données étant obtenues d'une radio-étiquette associée audit objet par un premier dispositif embarqué dans ledit premier véhicule et configuré pour lire lesdites deuxièmes données stockées sur ladite radio-étiquette lors de la sortie dudit objet dudit premier véhicule ; réception d'une troisième information représentative de géolocalisation dudit deuxième véhicule ; réception d'une quatrième donnée émise par un premier dispositif de communication mobile associé audit premier véhicule, ladite quatrième donné étant représentative d'une image d'une plaque d'immatriculation du deuxième véhicule ; authentification du premier dispositif de communication mobile et d'un opérateur procédant à la livraison ; comparaison desdites premières données, desdites deuxièmes données, desdites troisièmes et/ou desdites quatrièmes données avec un ensemble de données de références et comparaison de ladite première information avec ladite troisième information ; et lorsque le premier dispositif de communication mobile et l'opérateur sont authentifiés, lesdites premières, deuxièmes, troisièmes et/ou quatrièmes données sont conformes auxdites données de référence et lorsque ladite première information correspond à ladite troisième information, transmission d'une première requête de déverrouillage à distance dudit deuxième véhicule ; et réception de cinquièmes données représentatives d'une confirmation de chargement dudit objet dans ledit deuxième véhicule, lesdites cinquièmes données étant obtenues d'une lecture desdites deuxièmes données de ladite radio-étiquette par un deuxième dispositif embarqué dans ledit deuxième véhicule et configuré pour lire lesdites deuxièmes données stockées sur ladite radio-étiquette lors du chargement dudit objet dans ledit deuxième véhicule.

Un tel procédé permet de contrôler que la livraison d'un objet d'un premier véhicule dans un deuxième véhicule s'effectue correctement de manière sécurisée en vérifiant que le premier et le deuxième véhicules sont situés à côté l'un de l'autre, en vérifiant que l'objet sorti du premier véhicule est bien l'objet à livrer dans le deuxième véhicule via les données contenues dans la radio-étiquette associée à l'objet, en vérifiant que le deuxième véhicule est bien celui destiné à réceptionner l'objet à livrer par identification de sa plaque d'immatriculation et en vérifiant que le premier dispositif de communication mobile utilisé pour émettre la quatrième donnée représentative de la plaque d'immatriculation et l'opérateur procédant à la livraison sont authentifiés. Le déverrouillage à distance du véhicule destinataire permet de s'affranchir d'un échange de clé ou de code.

Selon une variante, ladite première requête de déverrouillage à distance dudit deuxième véhicule est transmise à destination dudit deuxième véhicule.

Selon une variante, ladite première requête de déverrouillage à distance dudit deuxième véhicule est transmise à destination d'un deuxième dispositif de communication mobile associé audit deuxième véhicule, ledit deuxième véhicule étant déverrouillé par transmission d'une deuxième requête de déverrouillage à destination dudit deuxième véhicule .

Selon une variante, le procédé comprend en outre une étape de mise à jour d'une liste d'objets embarqués dans ledit premier véhicule à partir desdites deuxièmes données reçues.

Selon une variante, le procédé comprend en outre une étape de détermination d'un indice de confiance associé à la livraison dudit objet dudit premier véhicule audit deuxième véhicule.

Selon une variante, le procédé comprend en outre un déverrouillage dudit deuxième véhicule pendant une durée déterminée.

Selon un deuxième aspect, la présente invention concerne un dispositif de contrôles numériques de livraison d'un objet d'un premier véhicule à un deuxième, le dispositif comprenant une mémoire associée à un processeur configuré pour la mise en œuvre des étapes du procédé selon le premier aspect de la présente invention.

Selon un troisième aspect, la présente invention concerne un système de contrôles numériques de livraison d'un objet d'un premier véhicule à un deuxième véhicule, le système comprenant un dispositif tel que décrit ci-dessus selon le deuxième aspect de la présente invention, le premier véhicule et le deuxième véhicule étant reliés en communication sans fil avec le dispositif, le premier véhicule et le deuxième véhicule comprenant chacun des moyens de lecture de données stockées sur au moins une radio-étiquette.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation non limitatifs de la présente invention ci-après, en référence aux figures 1 à 4 annexées, sur lesquelles :
[Fig. 1] illustre schématiquement un environnement de communication pour véhicules, selon un exemple de réalisation particulier et non limitatif de la présente invention ;
[Fig. 2] illustre schématiquement un véhicule de l'environnement de la figure 1, selon un exemple de réalisation particulier et non limitatif de la présente invention ;
[Fig. 3] illustre schématiquement un dispositif configuré pour contrôler la livraison d'un objet d'un premier véhicule de la figure 1 à un deuxième véhicule de la figure 1, selon un exemple de réalisation particulier et non limitatif de la présente invention ; et
[Fig. 4] illustre un organigramme des différentes étapes d'un procédé de contrôle de livraison d'un objet d'un premier véhicule de la figure 1 à un deuxième véhicule de la figure 1 par vérification d'une plaque d'immatriculation du deuxième véhicule, selon un exemple de réalisation particulier et non limitatif de la présente invention.

### Description des exemples de réalisation

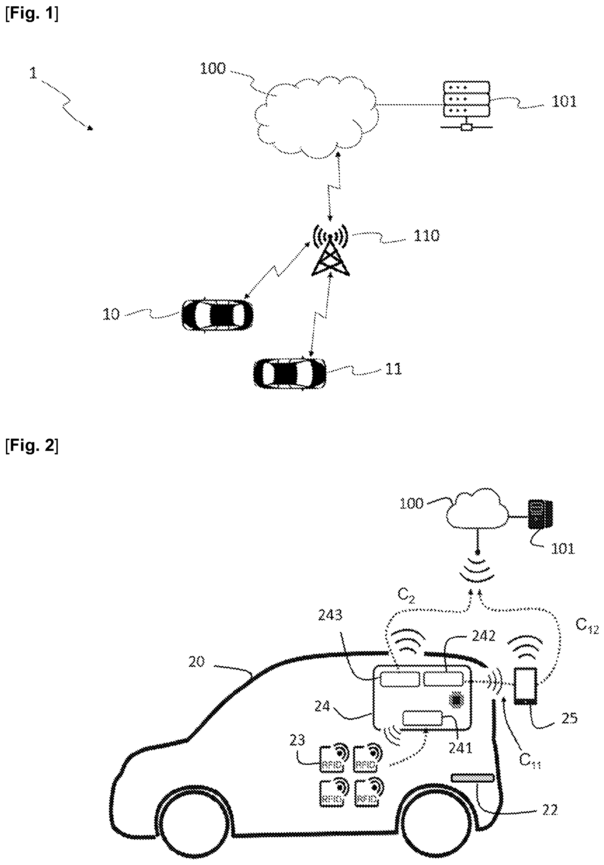

Un procédé, un système et un dispositif de contrôles numériques de livraison d'un objet d'un premier véhicule à un deuxième véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, le contrôle numérique de la livraison d'un objet par un premier véhicule vers un deuxième véhicule comprend la réception, par exemple par un dispositif distant relié en communication sans fil au premier véhicule, de premières données représentatives d'identification du premier véhicule, de deuxièmes données représentatives de l'objet et de troisièmes données comprenant une première information représentative de géolocalisation du premier véhicule et une deuxième information représentative d'un instant temporel auquel l'objet est sorti du premier véhicule (pour être livré au deuxième véhicule). Les deuxièmes données sont obtenues par la lecture d'une radio-étiquette associée à l'objet par un premier dispositif embarqué dans le premier véhicule, lequel premier dispositif est configuré pour lire les deuxièmes données stockées sur la radio-étiquette lors de la sortie de l'objet du premier véhicule. Le dispositif distant reçoit en outre une troisième information représentative de géolocalisation du deuxième véhicule et une quatrième donnée représentative d'une image d'une plaque d'immatriculation du deuxième véhicule. Ladite quatrième donné est émise par un premier dispositif de communication mobile associé audit premier véhicule. Le dispositif distant authentifie le premier dispositif de communication mobile et l'opérateur procédant à la livraison.

Les premières, deuxièmes, troisièmes et/ou quatrièmes données sont comparées à des données de référence, par exemple stockées en mémoire du dispositif distant. La première information de géolocalisation du premier véhicule est quant à elle comparée à la troisième information de géolocalisation du deuxième véhicule.

Lorsque le premier dispositif de communication mobile et l'opérateur sont authentifiés, les premières, deuxièmes, troisièmes et/ou quatrièmes données sont conformes aux données de référence et lorsque la première information correspond à la troisième information, alors une première requête de déverrouillage à distance du deuxième véhicule est transmise par le dispositif distant pour déverrouiller le deuxième véhicule et permettre la livraison de l'objet sorti du premier véhicule dans le deuxième véhicule. Des cinquièmes données représentatives d'une confirmation de chargement de l'objet dans le deuxième véhicule sont reçues par le dispositif distant relié en communication sans fil avec le deuxième véhicule. Ces cinquièmes données sont avantageusement obtenues via la lecture des deuxièmes données de la radio-étiquette par un deuxième dispositif embarqué dans le deuxième véhicule et configuré pour lire les deuxièmes données stockées sur la radio-étiquette lors du chargement de l'objet dans le deuxième véhicule.

Un objet correspond à tout objet physique, formé par exemple par un unique dispositif ou par une pluralité de dispositifs. A cet effet, un objet correspond également à un colis renfermant plusieurs objets.

La figure 1 illustre schématiquement un environnement 1 de communication pour véhicules, selon un exemple de réalisation particulier et non limitatif de la présente invention.

Selon l'exemple de la figure 1, l'environnement 1 comprend un premier véhicule 10 relié en communication sans fil avec un ou plusieurs dispositifs distants 101 via une infrastructure de communication. L'environnement 1 comprend également un deuxième véhicule 11 relié en communication sans fil avec le ou les dispositifs distants 101 via l'infrastructure de communication.

Selon l'exemple de la figure 1, le premier véhicule 10 et le deuxième véhicule 11 correspondent chacun à un véhicule terrestre, de type véhicule automobile, camionnette, camion, moto ou car par exemple. Chaque véhicule 10, 11 correspond par exemple à un véhicule à moteur thermique, à moteur(s) électrique(s) ou encore un véhicule hybride avec un moteur thermique et un ou plusieurs moteurs électriques. Bien entendu, le premier véhicule 10 et le deuxième véhicule 11 de la figure 1 sont donnés à titre d'illustration uniquement et l'invention ne se limite pas à ce type de véhicule particulier. Le premier véhicule 10 et/ou le deuxième véhicule 11 correspondent à un véhicule autonome ou non, c'est-à-dire un véhicule circulant selon un niveau d'autonomie déterminée ou sous la supervision totale du conducteur.

Selon un autre exemple, le premier véhicule 10 et/ou le deuxième véhicule 11 correspond(ent) à un véhicule volant, par exemple un avion ou un drone. Selon encore un autre exemple, le premier véhicule 10 et/ou le deuxième véhicule 11 correspond(ent) à un véhicule naviguant sur l'eau, par exemple un bateau, une péniche, un portecontainer. Un véhicule selon l'invention correspond à tout véhicule adapté pour le transport d'objet d'un point à un autre, que le véhicule correspondre à un véhicule roulant, volant ou naviguant sur l'eau.

Le premier véhicule 10 est par exemple de même type que le deuxième véhicule 11. Selon un autre exemple, le premier véhicule 10 et le deuxième véhicule 11 sont de types différents (par exemple le premier véhicule 10 est un véhicule terrestre et le deuxième véhicule 11 est un véhicule volant).

Le premier véhicule 10 et le deuxième véhicule 11 sont chacun configurés pour transporter un ou plusieurs objets et pour lire les données stockées sur des radio-étiquettes associés aux objets qu'ils transportent. La figure 2 décrite ci-après illustre un exemple de premier véhicule et de deuxième véhicule, chaque véhicule 10, 11 embarquant des moyens de lecture de données stockées sur radio-étiquette.

Le dispositif distant 101 illustré sur la figure 1 correspond par exemple à un serveur du « cloud » 100 (ou « nuage » en français).

L'infrastructure de communication reliant le premier véhicule 10 et le deuxième véhicule 11 au « cloud » 100 (et in fine au dispositif distant 101) correspond avantageusement à une infrastructure d'un réseau de communication sans fil, par exemple une infrastructure de communication de réseau mobile, permettant au premier véhicule 10 de communiquer des données au dispositif distant 101, par exemple pour transmettre des données à destination du dispositif distant 101 (et selon une variante de recevoir des données du dispositif distant 101). Le deuxième véhicule 11 échange également des données avec le dispositif distant 101 via l'infrastructure de réseau de communication sans fil, par exemple pour transmettre des données à destination du dispositif distant 101 et recevoir des données du dispositif distant 101.

L'infrastructure de communication mobile permettant la communication sans fil de données entre le premier véhicule 10 et le deuxième véhicule 11 d'une part et le dispositif distant 101 d'autre part comprend par exemple un ou plusieurs équipements de communication 110 de type antenne relais (réseau cellulaire) ou unité bord de route, dite UBR. Dans un mode de communication utilisant une telle architecture réseau, les données sont par exemple transmises par le premier véhicule 10 et/ou le deuxième véhicule 11 au dispositif distant 101 du « cloud » 100 (et inversement) via une antenne relais 110 (l'antenne 110 étant par exemple relié au « cloud » 100 via une liaison filaire).

Le premier véhicule 10 et le deuxième véhicule 11 embarquent également avantageusement chacun un système de communication configuré pour communiquer avec le « cloud » 100 et le ou les dispositifs distants 101.

Le système de communication des véhicules 10, 11 comprend par exemple une ou plusieurs antennes de communication reliées à une unité de contrôle télématique, dite TCU (de l'anglais « Telematic Control Unit ») (aussi appelée boitier BTA (« Boitier Télématique Autonome ») ou boitier BSRF (« Boitier de Servitudes Radio Fréquence »)), elle-même reliée à un ou plusieurs calculateurs du système embarqué de chaque véhicule 10, 11. La ou les antennes, l'unité TCU et le ou les calculateurs forment par exemple une architecture multiplexée pour la réalisation de différents services utiles pour le bon fonctionnement des véhicules. Le ou les calculateurs et l'unité TCU communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Le système de communication sans fil permettant l'échange de données entre le premier véhicule 10 et le deuxième véhicule 11 d'une part et le dispositif distant 101 d'autre part correspond par exemple à :
- un système de communication véhicule à infrastructure V2I (de l'anglais « vehicle-to-infrastructure »), par exemple basé sur les standards 3GPP LTE-V ou IEEE 802.11p de ITS G5 ; ou
- un système de communication de type réseau cellulaire, par exemple un réseau de type LTE (de l'anglais « Long-Term Evolution » ou en français « Evolution à long terme »), LTE-Advanced (ou en français LTE-avancé) LTE 4G ou 5G ; ou
- un système de communication de type Wifi selon IEEE 802.11, par exemple selon IEEE 802.11n ou IEEE 802.11ac.

Selon un mode de réalisation particulier, chaque véhicule 10, 11 embarque un système de géolocalisation par satellite configuré pour déterminer la position courante du véhicule 10, 11, le véhicule 10, 11 embarquant à cet effet un récepteur d'un système de type GPS (de l'anglais « Global Positioning System » ou en français « Système mondial de positionnement ») ou Galileo par exemple en communication avec un calculateur du système embarqué du véhicule 10, 11. La position courante est par exemple exprimée sous la forme de coordonnées, par exemple sous la forme d'un couple latitude/longitude.

Selon une variante, un tel récepteur de système GPS ou Galileo est embarqué dans un dispositif de communication mobile (par exemple un téléphone intelligent, un objet intelligent tel qu'une montre connectée ou une tablette) relié en communication, par exemple sans fil (Bluetooth^{®} ou Wifi^{®}), avec le véhicule 10, 11.

La figure 2 illustre schématiquement un véhicule 20 destiné au transport d'un ensemble d'objets comprenant un ou plusieurs objets, selon un exemple de réalisation particulier et non limitatif de la présente invention.

Le véhicule 20 correspond avantageusement au premier véhicule 10 et/ou au deuxième véhicule 11.

Le véhicule 20 comporte une zone cargo dans laquelle il embarque un ensemble d'objets, une étiquette d'identification 23 étant apposée sur chacun des objets de cet ensemble.

Selon un exemple de réalisation particulier et non limitatif, une étiquette d'identification 23 comporte une interface de type RFID (de l'anglais « Radio Frequency Identification » ou en français « Identification par radiofréquence ») qui permet la lecture à courte distance des données mémorisées par cette étiquette d'identification 23. Une telle étiquette d'identification de type RFID est appelée radio-étiquette RFID.

Une radio-étiquette 23 correspond à un marqueur comprenant une puce électronique associée à une antenne. Une radio-étiquette est aussi connue sous le nom d'étiquette RFID ou transpondeur RFID. La radio-étiquette 23 correspond avantageusement à une étiquette RFID passive, c'est-à-dire à une étiquette RFID non alimentée par une batterie.

Le véhicule 20 embarque avantageusement un ou plusieurs lecteurs de radio-étiquettes 22, par exemple arrangés dans le coffre ou le cargo du véhicule 20. Un lecteur de radio-étiquette est aussi appelé lecteur RFID (de l'anglais « RFID-tag » ou « RFID transponder », RFID correspondant à « Radio Frequency Identification », soit en français « Identification par radiofréquence »), interrogateurs, coupleurs ou station de base. Un tel lecteur émet une onde électromagnétique activant une radio-étiquette lorsque cette dernière entre dans le rayon de couverture du lecteur. L'onde électromagnétique active une antenne de la radio-étiquette, générant une alimentation pour cette radio-étiquette.

Le lecteur RFID 22 coordonne la communication RFID entre le lecteur et la radio-étiquette 23. Le lecteur RFID assure également la télé-alimentation de la radio-étiquette 23. Le lecteur RFID comprend par exemple un module radio fréquence pour la transmission et la réception de signaux vers et depuis la radio-étiquette 23 ; une unité de contrôle ; une antenne et une interface pour transmettre les premières données reçues de la radio-étiquette, par exemple à destination d'un calculateur du système embarqué du véhicule 20.

La fréquence de communication entre le lecteur RFID 22 et une radio-étiquette 23 est par exemple égale à 13,56 MHz, la portée de communication étant par exemple comprise entre 10 cm et 1 ou 2 m.

La radio-étiquette 23 contient en mémoire des premières données représentatives d'une identification de l'objet sur lequel elle est apposée. Ainsi, lorsqu'un objet comprenant une radio-étiquette 23 est déposé, embarqué dans le véhicule 20 ou sorti du véhicule 20, le lecteur RFID 22 interroge la radio-étiquette qui lui transmet en retour les premières données d'identification de l'objet, et ce pour chaque objet embarqué dans le véhicule 20. Les données représentatives de chaque objet embarqué et stockées dans la radio-étiquette 23 associée à chaque objet sont par exemple codées sur 96 ou 128 bits.

Le système d'identification des objets déposés dans la zone cargo ou le coffre ne se limite pas à l'utilisation d'un système RFID mais s'étend à tout système d'identification de radio-identification, par exemple basé sur Bluetooth^{®}, Wifi^{®} ou toute autre technologie.

Par exemple, et selon une variante de réalisation, le système d'identification d'un objet déposé dans la zone cargo ou le coffre du véhicule 20 correspond à un système de type UWB RTLS (de l'anglais « Ultra-Wideband Real-Time Locating System » ou en français « Système de localisation temps réel ultra large bande ») comprenant une radio-étiquette et un ou plusieurs transmetteurs utilisant la technique de modulation radio d'impulsions de très courte durée sur un large spectre de fréquence.

Selon un autre exemple, le système d'identification d'un objet déposé dans la zone cargo ou le coffre du véhicule 20 correspond à un système de type WiFi RTLS ou Bluetooth RTLS, de tels systèmes utilisant également une radio-étiquette associée à l'objet déposé dans le coffre dont les données stockées en mémoire sont reçues par un plusieurs lecteurs arrangés dans le coffre du véhicule 20.

Selon un autre exemple de réalisation optionnel, le véhicule 20 embarque, en complément du système de détection d'objets de type RFID comprenant un ou plusieurs lecteurs RFID 22, un système de détection d'éléments d'identification d'objet à métasurface(s) relais. Un tel système est par exemple décrit dans le brevet français FR 3 103 327 A1 publié le 21 mai 2021. Un tel système de détection à métasurfaces comprend avantageusement un ou plusieurs dispositifs de détection à métasurface. Un tel dispositif de détection à métasurface comprend un lecteur d'identification configuré pour lire les données stockées sur une étiquette d'identification apposée sur chaque objet (par exemple la radio-étiquette 23) via au moins une antenne et au moins une métasurface configurée pour réfléchir (selon une première loi déterminée) des ondes émises par ladite au moins une antenne et destinées à la radio-étiquette et pour réfléchir (selon une deuxième loi déterminée) des ondes issues de la radio-étiquette et destinées à la au moins une antenne.

Selon un exemple de réalisation optionnel particulier et non limitatif, le véhicule 20 comporte également un dispositif 24 de transmission des données mémorisées sur chaque étiquette d'identification 23. Un tel dispositif 24 de transmission correspond par exemple à la TCU du système embarqué décrite en regard de la figure 1 pour communication des données au dispositif distant 101 et/ou avec un dispositif de communication mobile 25 de type téléphone intelligent (de l'anglais « smartphone »), tablette ou objet connecté. Le système de transmission de données 24 reçoit par exemple les données stockées sur chaque radio-étiquette 23 du ou des lecteurs RFID 22 pour les transmettre à destination du dispositif distant 101 et/ou du dispositif de communication mobile 25.

Selon un exemple de réalisation particulier et non limitatif, le dispositif 24 comprend une interface de communication longue distance 243 qui permet d'établir une communication avec d'autres dispositifs tel que par exemple le dispositif distant 101. L'interface de communication longue distance 243 correspond par exemple à un transmetteur configuré pour transmettre et recevoir des informations et/ou des données via un canal de communication. L'interface de communication longue distance 243 comprend par exemple un modem et/ou une carte réseau et le canal de communication peut par exemple être mis en œuvre dans un medium filaire et/ou sans fil.

Des données telles que celles mémorisées sur une étiquette d'identification 23, peuvent être transmises par le dispositif 24 à destination du dispositif distant 101 en utilisant un réseau de communication longue distance de type cellulaire tel qu'un réseau 4G (ou 5G) basé sur la norme LTE (de l'anglais Long Term Evolution en français « Evolution à long terme ») définie par le consortium 3GPP.

Selon un exemple de réalisation particulier et non limitatif, le dispositif 24 comprend un bloc 241, 242 d'interfaces de communication courte distance pour communiquer avec des dispositifs externes, par exemple avec une étiquette d'identification 23 ou le dispositif de communication mobile 25. Le bloc 241, 242 d'interfaces de communication courte distance comprend une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz.
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface RFID.

Des données telles que celles mémorisées sur une étiquette d'identification 23, peuvent être transmises par le dispositif 24 au dispositif de communication mobile 25 via l'une des interfaces de communication courte distance du bloc 242.

Selon l'exemple de réalisation particulier et non limitatif du dispositif 24 illustré à la figure 2, le dispositif 24 comporte une interface de communication courte distance 241, par exemple de type RFID, qui est configurée pour établir une communication courte distance avec une étiquette d'identification 23 apposée sur chaque colis embarqué dans le véhicule 20. Une telle interface de communication courte distance 241 correspond par exemple au lecteur RFID 22 et remplace ce dernier (ou vient en complément de ce dernier).

Selon l'exemple de réalisation particulier et non limitatif du dispositif 24 illustré à la figure 2, Le dispositif 24 comporte également une autre interface de communication courte distance 242, par exemple de type radiofréquence Wi-Fi^{®} ou Bluetooth^{®} qui est configurée pour établir une communication courte distance avec le dispositif de communication mobile 25.

Le dispositif de communication mobile 25 héberge par exemple une application dédiée à l'établissement d'une communication courte distance avec l'interface courte distance 242. Le dispositif de communication mobile 25 est par exemple également configuré pour établir une communication longue distance, par exemple de type 4G ou 5G, avec le dispositif distant 101.

Si une communication courte distance est établie ou peut être établie entre le dispositif 24 et le dispositif de communication mobile 25 via l'interface courte distance 242 alors un canal de communication C₁₁ est établi entre le dispositif 24 et le dispositif de communication mobile 25.

Si une communication longue distance est établie ou peut être établie entre le dispositif de communication mobile 25 et un équipement de l'infrastructure de réseau de communication alors un canal de communication C₁₂ est considéré comme étant établi entre le dispositif de communication mobile 25 et le dispositif distant destinataire 101. Si les canaux de communications C₁₁ et C₁₂ sont établis alors le dispositif 24 peut communiquer avec le dispositif distant 101 via un canal de communication C₁ formé des canaux de communication C₁₁ et C₁₂.

Si une communication longue distance est établie ou peut être établie entre le dispositif 24 et le dispositif distant 101 via l'interface de communication longue distance 243, alors un canal de communication C₂ est considéré comme étant établi entre le dispositif 24 et le dispositif distant 101.

Un processus de contrôles numériques de livraison d'un objet du premier véhicule 10 au deuxième véhicule 11 est avantageusement mis en œuvre par le dispositif distant 101 (c'est-à-dire par un ou plusieurs processeurs ou unités de calculs d'un dispositif de traitement de données tel qu'un serveur par exemple). Selon un autre exemple de mise en œuvre, le processus est mis en œuvre par un système comprenant dispositif distant 101 relié en communication sans fil aux véhicules 10 et 11. Le processus est décrit ci-dessous relativement à un exemple particulier de réalisation de livraison d'un objet du premier véhicule 10 au deuxième véhicule 11. L'invention ne se limite cependant pas à un tel exemple mais s'étend à un processus de contrôle de livraison d'un ou plusieurs objets entre 2 ou plus de véhicules. Par exemple, un premier objet est livré par le premier véhicule 10 au deuxième véhicule 11, un deuxième objet est livré par le premier véhicule 10 à un troisième véhicule et/ou un troisième objet est livré par le troisième véhicule au deuxième véhicule 11.

Dans une première opération, le premier véhicule 10 arrive à une localisation déterminée correspondant par exemple à une adresse de livraison, par exemple obtenue du dispositif distant 101. Selon une variante, l'adresse de livraison est reçue d'un autre dispositif de type serveur, hébergeant par exemple une plateforme de gestion de livraison et/ou une plateforme de gestion d'une flotte de véhicules (par exemple une flotte de véhicules de livraison), l'adresse étant par exemple transmise via une connexion sans fil à un dispositif de communication mobile (de type téléphone intelligent) hébergeant par exemple une application mobile dédiée, le dispositif de communication mobile étant par exemple en possession du livreur du premier véhicule 10 et par exemple relié au premier véhicule 10 via une liaison sans fil de type Bluetooth^{®} ou Wifi^{®} par exemple.

Dans une deuxième opération, le dispositif distant 101 reçoit un ensemble de données émises par le premier véhicule 10 via la connexion sans fil reliant le premier véhicule 10 au dispositif distant 101.

L'ensemble de données comprend par exemple :
- des premières données représentatives d'identification du premier véhicule 10 ;
- des deuxièmes données représentatives de l'objet à livrer, des deuxièmes données étant obtenues d'une radio-étiquette 23 associée à ou apposée sur l'objet à livrer par le lecteur 22; la lecture des données contenues sur la radio-étiquette par le lecteur 22 est avantageusement réalisée automatiquement lorsque la radio-étiquette passe à proximité du lecteur 22, c'est-à-dire dans le champ d'action du lecteur 22 correspondant à sa portée de rayonnement qui dépend de la longueur d'onde utilisée, lors du déchargement de l'objet du premier véhicule 10 ;
- des troisièmes données comprenant une première information représentative de géolocalisation du premier véhicule 10 et une deuxième information représentative d'un instant temporel auquel l'objet est sorti ou déchargé du premier véhicule 10 ; la première information est par exemple obtenue du système de navigation embarqué dans le premier véhicule 10 et la deuxième information est par exemple obtenue d'une horloge associée au lecteur 22.

Les premières, deuxièmes et troisièmes données sont par exemple transmises sous la forme d'une ou plusieurs trames de données, l'identifiant du premier véhicule 10 étant par exemple compris dans l'en-tête (de l'anglais « header ») de la trame.

La première information et la deuxième information sont par exemple associées aux deuxièmes données lors de la lecture de la radio-étiquette 23 par le lecteur 22. Cette association permet d'horodater l'évènement de déchargement de l'objet du premier véhicule 10 et de confirmer la localisation de l'objet lors du déchargement du premier véhicule 10.

Par exemple, les deuxièmes données stockées sur une radio-étiquette comprennent une ou plusieurs des données suivantes, selon toutes combinaisons possibles :
- des données représentatives d'un identifiant de l'objet ; et/ou
- des données représentatives du type de l'objet ; et/ou
- des données représentatives des dimensions de l'objet ; et/ou
- des données représentatives de la masse ou du poids de l'objet ; et/ou
- des données représentatives d'une composition de l'objet, par exemple l'ensemble des éléments particuliers formant l'objet, ou lorsque l'objet correspond à un colis comprenant plusieurs objets, la liste des objets compris dans le colis ; et/ou
- des données représentatives du ou des matériaux de construction de l'objet ; et/ou
- des données représentatives du destinataire de l'objet, par exemple l'adresse et/ou le nom du destinataire ; et/ou
- des données représentatives du ou des véhicules destinés à transporter l'objet ; et/ou
- des données représentatives d'une date de livraison prévue de l'objet ; et/ou
- des données représentatives d'un niveau de fragilité de l'objet ; et/ou
- des données représentatives d'un niveau de dangerosité de l'objet, par exemple objet inflammable, matière dangereuse, matière explosive, etc. ; et/ou
- des données représentatives d'une valeur de l'objet.

La liste ci-dessus est donnée à titre d'exemple illustratif et n'est pas exhaustive, toute donnée représentant une caractéristique de l'objet pouvant être stockée dans la radio-étiquette associée à l'objet.

Dans une troisième opération, le dispositif distant 101 reçoit du deuxième véhicule 11 une troisième information représentative de géolocalisation du deuxième véhicule 11, via la liaison sans fil reliant le dispositif distant 101 au deuxième véhicule 11.

Cette troisième information est par exemple transmise par le deuxième véhicule 11 lorsque le deuxième véhicule 11 s'arrête, par exemple à l'arrêt du moteur du deuxième véhicule 11 ou si le deuxième véhicule 11 reste immobile pendant une durée supérieure à un seuil (par exemple 30, 45 ou 60 secondes).

Dans une quatrième opération, le dispositif distant 101 reçoit une quatrième donnée représentative d'une image d'une plaque d'immatriculation du deuxième véhicule 11.

Par exemple, le livreur peut prendre une photo de la plaque d'immatriculation du deuxième véhicule 11 via un dispositif de communication mobile (dit premier dispositif de communication mobile) porté par le livreur et l'envoyer à destination du dispositif distant 101 via la connexion sans fil reliant le dispositif distant 101 à le dispositif de communication mobile.

Dans une cinquième opération, le premier dispositif de communication mobile et le livreur (opérateur procédant à la livraison) sont authentifiés.

Cette cinquième opération permet de sécuriser le transfert d'un objet du premier vers le deuxième véhicule en authentifiant l'opérateur effectuant la livraison de l'objet et le premier dispositif de communication mobile utilisé pour émettre une photo de la plaque d'immatriculation du deuxième véhicule 11.

Le processus d'authentification mis en œuvre correspond à toute méthode d'authentification d'une personne ou d'un dispositif connue de l'homme du métier. Une telle méthode est par exemple décrite dans le document de brevet FR 3 087 551 A1 publié le 24 avril 2020. Selon une telle méthode, un échange de clés numériques est mis en œuvre entre les différents acteurs associés à la livraison de l'objet c'est-à-dire le livreur et le conducteur/propriétaire du deuxième véhicule 11 pour permettre au conducteur/propriétaire du deuxième véhicule 11 que la demande de déverrouillage à distance du deuxième véhicule 11 est bien initiée par le livreur.

Selon un autre exemple, le processus d'authentification comprend la transmission d'une requête d'authentification (par exemple par le dispositif distant 101 sur requête du deuxième dispositif de communication mobile) à destination du premier dispositif de communication mobile. A réception de cette requête d'authentification, le porteur du premier dispositif de communication mobile (a priori le livreur) doit accuser réception de la requête en s'identifiant (par exemple via la lecture de son empreinte sur l'écran du premier dispositif de communication mobile, en répondant à une question avec la réponse attendue, la question et la réponse attendue étant stockée en mémoire du dispositif distant 101, ou encore en entrant un code reçu par un SMS (de l'anglais « Short Message Service » ou en français « Service de message court ») ou un courriel transmis par le dispositif distant via une Interface Homme Machine (IHM) embarquée sur le premier dispositif de communication mobile).

Dans une sixième opération, le dispositif distant 101 compare :
- les premières données, les deuxièmes données, les troisièmes données et/ou les quatrièmes données à des données de référence, par exemple stockées en mémoire du dispositif distant 101 ou dans une base de données reliée au dispositif distant 101 ; et
- la première information de localisation du premier véhicule 10 à la troisième information de localisation du deuxième véhicule 11.

Les données de référence comprennent par exemple des données de même nature ou de même type que les premières, deuxièmes, troisième et/ou quatrièmes données. Par exemple, la ou les comparaisons mises en œuvre entre les premières données, les deuxièmes données, les troisièmes et/ou les quatrièmes données à des données de référence correspondent à une ou plusieurs des comparaisons suivantes, selon toutes combinaisons possibles :
- une comparaison de l'objet déchargé avec une liste de référence d'objets destinés à être transportés dans le premier véhicule 10 ;
- une comparaison de l'objet déchargé avec une liste de référence d'un ou plusieurs objets à décharger ou à livrer par le premier véhicule 10 ;
- une comparaison de la localisation du premier véhicule 10 (correspondant à la première information) avec une adresse ou une localisation prévue de livraison de l'objet ;
- une comparaison de l'heure de déchargement de l'objet du premier véhicule (correspondant à la deuxième information) avec une heure de référence estimée pour la livraison de l'objet ;
- une comparaison d'une image de plaque d'immatriculation avec une image de plaque d'immatriculation stockée dans une mémoire du dispositif distant 101 par traitement d'images permettant la reconnaissance de plaque d'immatriculation.

Selon une variante de réalisation, la comparaison comprend en outre une ou plusieurs des comparaisons suivantes, pour assurer par exemple le suivi des objets embarqués dans le premier véhicule 10 :
- une comparaison du ou des types d'objets embarqués avec une liste d'objets autorisés à être transportés dans le premier véhicule 10 ;
- une comparaison d'une masse totale de l'ensemble d'objets détectés avec une masse maximale autorisée associée au premier véhicule 10 ;
- une comparaison d'un volume de l'ensemble d'objets détectés avec un volume de chargement maximal du premier véhicule 10 ; et
- une comparaison d'un nombre d'objets d'un même type avec un nombre de référence associé au type.

La comparaison entre les premières données, les deuxièmes données et/ou les troisièmes données d"une part avec les données de référence d'autre part permet de vérifier que l'objet qui est déchargé du premier véhicule (détecté par le lecteur 22) correspond bien à l'objet à livrer.

La comparaison entre la quatrième donné avec des données de référence permet d'identifier que le deuxième véhicule 11 est bien le véhicule destinataire de la livraison de l'objet à livrer.

La comparaison entre la première information de localisation du premier véhicule 10 à la troisième information de localisation du deuxième véhicule 11 permet de vérifier que les deux véhicules sont bien au même endroit au moment de la livraison prévue.

En fonction du résultat des comparaisons, le processus s'arrête ou se poursuit.

Par exemple, lorsque les comparaisons font apparaître un problème, c'est-à-dire au moins une différence entre les éléments comparés (par exemple l'objet déchargé ne correspond pas à l'objet à livrer et/ou les deux véhicules 10 et 11 ne sont pas à une même localisation et/ou la plaque d'immatriculation du deuxième véhicule 11 ne correspond pas à la plaque d'immatriculation du véhicule destinataire de la livraison), le processus s'arrête avec par exemple l'émission d'une alerte (par exemple à destination d'un gestionnaire des livraisons et/ou du destinataire de l'objet).

A contrario, lorsque le premier dispositif de communication mobile et l'opérateur sont authentifiés, les premières, deuxièmes, troisièmes et/ou quatrièmes données sont conformes aux données de référence et lorsque la première information correspond à la troisième information, alors le processus se poursuit avec les opérations ci-dessous.

Dans une septième opération, une première requête de déverrouillage à distance du deuxième véhicule 11 est transmise par le dispositif distant 101 via la connexion sans fil.

Selon un premier exemple de réalisation, la première requête de déverrouillage à distance (de l'anglais « remote access ») est transmise à destination du deuxième véhicule 11, ce qui entraine un déverrouillage automatique du deuxième véhicule 11, au moins de la porte du deuxième véhicule 11 donnant accès au coffre ou à la zone cargo du deuxième véhicule 11, sans intervention d'aucun utilisateur.

Selon un deuxième exemple de réalisation, la première requête de déverrouillage à distance est transmise à un dispositif de communication mobile (dit deuxième dispositif de communication mobile), par exemple un téléphone intelligent, par exemple appartenant au conducteur du deuxième véhicule 11.

A réception de la première requête de déverrouillage à distance, le porteur du deuxième dispositif de communication mobile déclenche le déverrouillage à distance du deuxième véhicule 11. Le déverrouillage à distance est par exemple déclenché par la transmission, par le deuxième dispositif de communication mobile à destination du deuxième véhicule 11 (par exemple via l'infrastructure de communication sans fil), d'une deuxième requête de déverrouillage à distance.

Dans une huitième opération, le deuxième véhicule 11 (par exemple la porte de coffre ou de zone cargo) est déverrouillée à réception de la première requête de déverrouillage à distance ou à réception de la deuxième requête de déverrouillage à distance, sans intervention du conducteur ou du propriétaire du deuxième véhicule.

Le déverrouillage de la ou les portes du deuxièmes véhicule 11 est par exemple limitée à une durée déterminée, par exemple une durée égale à 30, 60, 120 secondes, le décompte du temps commençant lors de la réception de la première requête ou de la deuxième requête. Lorsque la durée déterminée est écoulée, le deuxième véhicule 11 se verrouille automatiquement.

Selon un mode de réalisation particulier et optionnel, une liste des objets embarqués dans le premier véhicule 10 est mise à jour à partir des deuxièmes données reçues par le dispositif distant 101. La mise à jour de la liste permet de marquer l'objet comme étant sorti du premier véhicule 10, avec par exemple l'instant temporel de sorti du premier véhicule associé à l'identifiant de l'objet dans une table de suivi des objets embarqués.

La mise à jour de la liste des objets embarqués dans le premier véhicule 10 est par exemple conditionné par un ou plusieurs contrôles qui comprennent par exemple un ensemble de comparaisons comprenant une ou plusieurs opérations de comparaison, telles que par exemple :
- une comparaison de l'ensemble d'objets détectés avec une liste de référence d'objets destinés à être transportés dans le véhicule 10 ;
- une comparaison du ou des types d'objets embarqués avec une liste d'objets autorisés à être transportés dans le véhicule 10;
- une comparaison d'une masse totale de l'ensemble d'objets détectés avec une masse maximale autorisée associée au véhicule 10;
- une comparaison d'un volume de l'ensemble d'objets détectés avec un volume de chargement maximal du véhicule 10;
- une comparaison d'un ensemble d'adresses de destinataires de l'ensemble d'objets détectés avec un ensemble d'adresses de livraison associées au véhicule 10; et
- une comparaison d'un nombre d'objets d'un même type avec un nombre de référence associé au type.

En fonction du résultat de la ou comparaisons mises en œuvre, une ou plusieurs alertes sont par exemple émises pour alerter un contrôleur ou un utilisateur d'une erreur ou d'un problème sur le chargement du véhicule 10. Par exemple, les objets identifiés comme étant embarqués sont comparés à une liste prédéfinie des objets prévus comme devant être embarqués. Si une différence apparait, une alerte est rendue indiquant quels objets sont manquant ou quels objets ont été embarqués par erreur. Selon un autre exemple, si la masse totale des objets détectés comme étant embarqués dépasse une valeur seuil, par exemple le poids total en charge autorisé du véhicule 10, alors une alerte est rendue. Selon encore un autre exemple, si la nature d'au moins une partie des objets embarqués n'est pas compatible avec la nature du véhicule (par exemple des produits chimiques ou explosifs dans un véhicule non prévu à cet effet ou des produits réfrigérés dans un véhicule 10 non isolé thermiquement sans système de climatisation adéquat), alors une alerte est rendue.

Selon un autre mode de réalisation particulier et optionnel, une notation des différents acteurs associés à la livraison de l'objet (c'est-à-dire le premier véhicule 10 (ou son conducteur) et le deuxième véhicule 11 (ou son conducteur)) est déterminée pour évaluer la qualité du service de livraison. Une telle détermination est par exemple mise en œuvre par intelligence artificielle (par exemple selon une méthode dite d'apprentissage machine (de l'anglais « machine learning ») mise en œuvre par exemple via un réseau de neurones). Une telle détermination se base par exemple sur un ou plusieurs des critères suivants :
- livraison effectuée ou non par le premier véhicule 10 ;
- livraison effectuée par le premier véhicule 10 à l'horaire prévu et/ou à l'endroit prévu ;
- présence du deuxième véhicule 11 à l'horaire prévu et/ou à l'endroit prévu ;

La notation (correspondant par exemple à un indice de confiance) de chaque acteur est par exemple mise à jour à chaque livraison et la note obtenue est associée à chaque acteur dans une table de correspondance stockée en mémoire du dispositif distant 101.

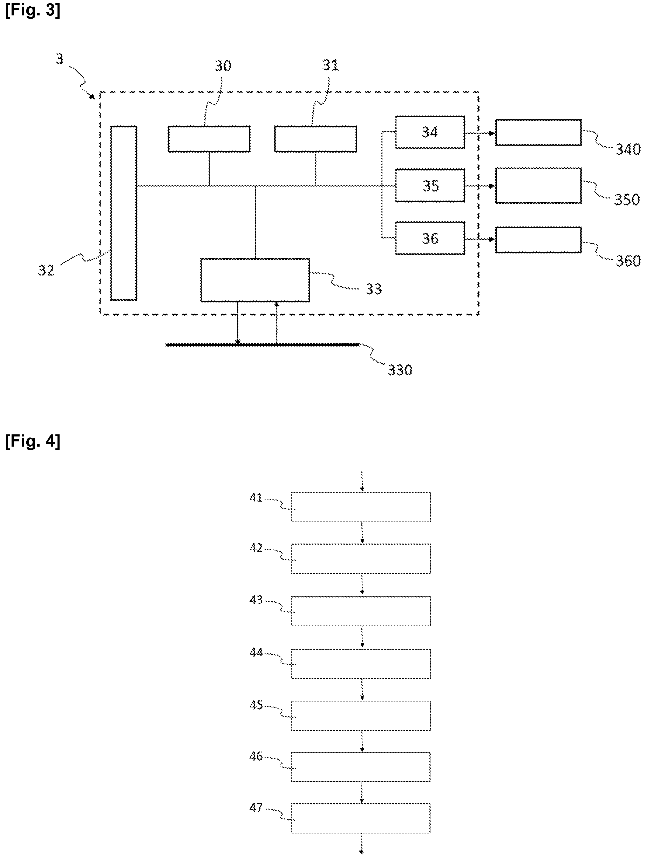

La figure 3 illustre schématiquement un dispositif 3 configuré pour contrôler numériquement la livraison d'un ou plusieurs d'objets par un premier véhicule à un deuxième véhicule, selon un exemple de réalisation particulier et non limitatif de la présente invention. Le dispositif 3 correspond par exemple à un dispositif de traitement de données, par exemple un serveur du « cloud », le dispositif 3 correspondant par exemple au dispositif distant 101.

Selon une variante, le dispositif 3 correspond à un calculateur du premier véhicule ou du deuxième véhicule recevant, transmettant et ou traitant des données échangées avec le dispositif distant 101.

Le dispositif 3 est par exemple configuré pour la mise en œuvre des opérations décrites en regard des figures 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable, un serveur, un objet connecté, un lecteur RFID. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents exemples de réalisation particuliers et non limitatifs, le dispositif 3 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes. Les éléments d'interface du bloc 32 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 3 peut fournir des signaux de sortie à un ou plusieurs dispositifs externes, tels qu'un écran d'affichage 340, tactile ou non, un ou des haut-parleurs 350 et/ou d'autres périphériques 360 (système de projection) via respectivement des interfaces de sortie 34, 35 et 36. Selon une variante, l'un ou l'autre des dispositifs externes est intégré au dispositif 3.

La figure 4 illustre un organigramme des différentes étapes d'un procédé de contrôles numériques de livraison d'un objet d'un premier véhicule à un deuxième véhicule, selon un exemple de réalisation particulier et non limitatif de la présente invention. Le procédé est par exemple mis en œuvre par un ou plusieurs processeurs d'un dispositif de traitement de données correspondant par exemple au dispositif distant 101 ou au dispositif 3 de la figure 3.

Dans une première étape 41, des premières données représentatives d'identification du premier véhicule sont reçues, des deuxièmes données représentatives de l'objet sont reçues et des troisièmes données comprenant une première information représentative de géolocalisation du premier véhicule et une deuxième information représentative d'un instant temporel auquel l'objet est sorti du premier véhicule sont reçues, les deuxièmes données étant obtenues d'une radio-étiquette associée à l'objet par un premier dispositif embarqué dans le premier véhicule et configuré pour lire les deuxièmes données stockées sur la radio-étiquette lors de la sortie de l'objet du premier véhicule.

Dans une deuxième étape 42, une troisième information représentative de géolocalisation du deuxième véhicule est reçue.

Dans une troisième étape 43, une quatrième donnée représentative d'une image d'une plaque d'immatriculation du deuxième véhicule est reçue. La quatrième donnée est émise par un premier dispositif de communication mobile associé audit premier véhicule 10.

Dans une quatrième étape 44, le premier dispositif de communication mobile et l'opérateur procédant à la livraison sont authentifiés.

Dans une cinquième étape 45, les premières données, les deuxièmes données, les troisièmes et/oules quatrièmes données sont comparées avec un ensemble de données de références et la première information est comparée avec la troisième information.

Lorsque le premier dispositif de communication mobile et l'opérateur sont authentifiés, les premières, deuxièmes, troisièmes et/ou quatrièmes données sont conformes aux données de référence et lorsque la première information correspond à la deuxième information, le procédé comprend en outre les étapes suivantes.

Dans une sixième étape 46, une première requête de déverrouillage à distance du deuxième véhicule est transmise.

Dans une septième étape 47, des cinquièmes données représentatives d'une confirmation de chargement de l'objet dans le deuxième véhicule sont reçues, les cinquièmes données étant obtenues d'une lecture des deuxièmes données de la radio-étiquette par un deuxième dispositif embarqué dans le deuxième véhicule et configuré pour lire les deuxièmes données stockées sur la radio-étiquette lors du chargement de l'objet dans le deuxième véhicule.

Selon une variante, les variantes et exemples des opérations décrits en relation avec la figure 1 et/ou la figure 2 s'appliquent aux étapes du procédé de la figure 4.

Bien entendu, la présente invention ne se limite pas aux exemples de réalisation décrits ci-avant mais s'étend à un procédé de contrôles numériques de livraison d'objets dans un ou plusieurs véhicules qui inclurait des étapes secondaires sans pour cela sortir de la portée de la présente invention. **Il** en serait de même d'un dispositif configuré pour la mise en œuvre d'un tel procédé.

La présente invention concerne également un système comprenant le dispositif distant, le premier véhicule 10, le deuxième véhicule 11, le premier véhicule 10 et le deuxième véhicule 11 embarquant chacun un ou plusieurs systèmes de détections de radio-étiquettes, le premier véhicule 10 et le deuxième véhicule 11 étant chacun relié en communication sans fil au dispositif distant 101.

## Revendications

1. Procédé de contrôles numériques de livraison d'un objet d'un premier véhicule (10) à un deuxième véhicule (11), ledit procédé étant mis en œuvre par un dispositif distant desdits premier et deuxième véhicules, ledit procédé comprenant les étapes suivantes :
- réception (41) de premières données représentatives d'identification dudit premier véhicule (10), de deuxièmes données représentatives dudit objet et de troisièmes données comprenant une première information représentative de géolocalisation dudit premier véhicule (10) et une deuxième information représentative d'un instant temporel auquel ledit objet est sorti dudit premier véhicule (10), lesdites deuxièmes données étant obtenues d'une radio-étiquette (23) associée audit objet par un premier dispositif (22) embarqué dans ledit premier véhicule (10) et configuré pour lire lesdites deuxièmes données stockées sur ladite radio-étiquette lors de la sortie dudit objet dudit premier véhicule (10) ;
- réception (42) d'une troisième information représentative de géolocalisation dudit deuxième véhicule (11) ;
- réception (43) d'une quatrième donnée émise par un premier dispositif de communication mobile (25) associé audit premier véhicule (10), ladite quatrième donné étant représentative d'une image d'une plaque d'immatriculation du deuxième véhicule (11) ;
- authentification (44) du premier dispositif de communication mobile (25) et d'un opérateur procédant à la livraison ;
- comparaison (45) desdites premières données, desdites deuxièmes données, desdites troisièmes et/ou desdites quatrièmes données avec un ensemble de données de références et comparaison de ladite première information avec ladite troisième information ; et
lorsque le premier dispositif de communication mobile et l'opérateur sont authentifiés, lesdites premières, deuxièmes, troisièmes et/ou quatrièmes données sont conformes auxdites données de référence et lorsque ladite première information correspond à ladite troisième information :
- transmission (46) d'une première requête de déverrouillage à distance dudit deuxième véhicule (11) ; et
- réception (47) de cinquièmes données représentatives d'une confirmation de chargement dudit objet dans ledit deuxième véhicule (11), lesdites cinquièmes données étant obtenues d'une lecture desdites deuxièmes données de ladite radio-étiquette (23) par un deuxième dispositif (22) embarqué dans ledit deuxième véhicule (11) et configuré pour lire lesdites deuxièmes données stockées sur ladite radio-étiquette (23) lors du chargement dudit objet dans ledit deuxième véhicule (11).

2. Procédé selon la revendication 1, pour lequel ladite première requête de déverrouillage à distance dudit deuxième véhicule (11) est transmise à destination dudit deuxième véhicule (11).

3. Procédé selon la revendication 1, pour lequel ladite première requête de déverrouillage à distance dudit deuxième véhicule (11) est transmise à destination d'un deuxième dispositif de communication mobile (25) associé audit deuxième véhicule (11), ledit deuxième véhicule étant déverrouillé par transmission d'une deuxième requête de déverrouillage à destination dudit deuxième véhicule (11) .

4. Procédé selon l'une quelconque des revendications 1 à 3, comprenant en outre une étape de mise à jour d'une liste d'objets embarqués dans ledit premier véhicule (10) à partir desdites deuxièmes données reçues.

5. Procédé selon l'une quelconque des revendications 1 à 4, comprenant en outre une étape de détermination d'un indice de confiance associé à la livraison dudit objet dudit premier véhicule (10) audit deuxième véhicule (11).

6. Procédé selon l'une quelconque des revendications 1 à 5, comprenant en outre un déverrouillage dudit deuxième véhicule (11) pendant une durée déterminée.

7. Programme d'ordinateur comportant des instructions pour la mise en œuvre du procédé selon l'une quelconque des revendications précédentes, lorsque ces instructions sont exécutées par un processeur.

8. Support d'enregistrement lisible par un ordinateur sur lequel est enregistré un programme d'ordinateur comprenant des instructions pour l'exécution des étapes du procédé selon l'une des revendications 1 à 6.

9. Dispositif (3) de contrôles numériques de livraison d'un objet d'un premier véhicule à un deuxième véhicule, ledit dispositif (3) comprenant une mémoire (31) associée à au moins un processeur (30) configuré pour la mise en œuvre des étapes du procédé selon l'une quelconque des revendications 1 à 6.

10. Système de contrôles numériques de livraison d'un objet d'un premier véhicule à un deuxième véhicule, ledit système comprenant le dispositif selon la revendication 9, ledit premier véhicule (10) et ledit deuxième véhicule (11) étant reliés en communication sans fil avec ledit dispositif, ledit premier véhicule et ledit deuxième véhicule comprenant chacun des moyens de lecture (22) de données stockées sur au moins une radio-étiquette (23).

## Patentansprüche

1. Verfahren zum digitalen Steuern der Zustellung eines Objekts von einem ersten Empfang (10) zu einem zweiten Fahrzeug (11), wobei das Verfahren durch eine Vorrichtung implementiert wird, die von dem ersten und dem zweiten Fahrzeug entfernt ist, wobei das Verfahren die Schritte umfasst:
- Empfang (41) von ersten Daten, die die Identifizierung des ersten Fahrzeugs (10) darstellen, von zweiten Daten, die das Objekt darstellen, und von dritten Daten, die eine erste Information, die die Geolokalisierung des ersten Fahrzeugs (10) darstellt, und eine zweite Information, die einen Zeitpunkt darstellt, zu dem das Objekt von dem ersten Fahrzeug (10) entfernt wird, umfassen, wobei die zweiten Daten von einem Funketikett (23) erhalten werden, das dem Objekt durch eine erste Vorrichtung (22) zugeordnet ist an Bord des ersten Fahrzeugs (10) und konfiguriert, um die zweiten Daten, die auf dem Funketikett gespeichert sind, während des Ausstiegs aus dem ersten Objekt (10) zu lesen;
- Empfang (42) einer dritten Information, die die Geolokalisierung des zweiten Fahrzeugs (11) darstellt;
- Empfang (43) einer vierten Information, die von einer ersten mobilen Kommunikationsvorrichtung (25) übertragen wird, die dem ersten Fahrzeug (10) zugeordnet ist, wobei die vierte Information ein Bild eines Nummernschilds des zweiten Fahrzeugs (11) darstellt;
- Authentifizierung (44) der ersten mobilen Kommunikationsvorrichtung (25) und einer Lieferung, die die Referenz ausführt;
- Vergleichen (45) erste Daten, die zweiten Daten, die dritten und/oder die vierten Daten mit einem Satz von Bedienerdaten und Vergleichen der ersten Information mit der dritten Information;
und wenn die erste mobile Kommunikationsvorrichtung und die Referenz authentifiziert sind, sind die ersten, zweiten, dritten und/oder vierten Daten in Übereinstimmung mit der Übertragung, wobei die erste Information der dritten Information entspricht:
- Empfang (46) einer ersten Anforderung zum entfernten Entriegeln des zweiten Fahrzeugs (11); und
- Laden (47) von fünften Daten, die eine Bestätigung des Etiketts des Objekts in dem zweiten Fahrzeug (11) darstellen, wobei die fünften Daten aus einem Lesen der zweiten Daten des Funketiketts (23) durch eine zweite Vorrichtung erhalten werden (22) an Bord des zweiten Fahrzeugs (11) und konfiguriert zum Lesen der zweiten Daten, die auf der Funklast (23) gespeichert sind, während des Objektes in dem zweiten Fahrzeug (11).

2. Verfahren nach Anspruch 1, bei dem die erste Anforderung zum entfernten Entriegeln des zweiten Fahrzeugs (11) an das zweite Fahrzeug (11) übertragen wird.

3. Verfahren nach Anspruch 1, wobei die erste Fernentriegelungsanforderung des zweiten Fahrzeugs (11) an eine zweite mobile Kommunikationsvorrichtung (25) übertragen wird, die dem zweiten Fahrzeug (11) zugeordnet ist, wobei das zweite Fahrzeug durch Übertragung einer zweiten Entsperrungsanforderung an das zweite Fahrzeug (11) entriegelt wird.

4. Verfahren nach einem der Ansprüche 1 bis 3, ferner umfassend einen Schritt des Aktualisierens einer Liste von Objekten, die an Bord des ersten Fahrzeugs (10) getragen werden, auf der Grundlage der empfangenen zweiten Daten.

5. Verfahren nach einem der Ansprüche 1 bis 4, das ferner einen Schritt des Bestimmens eines Konfidenzindex umfasst, der mit der Zuführung des Objekts von dem ersten Fahrzeug (10) zu dem zweiten Fahrzeug (11) verbunden ist.

6. Verfahren nach einem der Ansprüche 1 bis 5, das ferner das Entriegeln des zweiten Fahrzeugs (11) für eine bestimmte Zeitdauer umfasst.

7. Computerplan, der Anweisungen für die Implementierung des Verfahrens nach einem der vorhergehenden Ansprüche umfasst, wenn diese Anweisungen von einem Prozessor ausgeführt werden.

8. Computerlesbares Aufzeichnungsmedium, auf dem ein Computerplan aufgezeichnet ist, das Anweisungen zum Ausführen der Schritte des Verfahrens nach einem der Ansprüche 1 bis 6 umfasst.

9. Vorrichtung (3) zur numerischen Steuerung der Zuführung eines Gegenstandes von einem ersten Fahrzeug zu einem zweiten Fahrzeug, wobei die Vorrichtung (3) einen Speicher (31) aufweist, der mit mindestens einem Prozessor (30) verbunden ist, der zur Durchführung der Schritte des Verfahrens nach einem der Ansprüche 1 bis 6 konfiguriert ist.

10. System zum numerischen Steuern der Abgabe eines Objekts von einem ersten Fahrzeug an ein zweites Fahrzeug, wobei das System die Vorrichtung nach Anspruch 9 umfasst, wobei das erste Fahrzeug (10) und das zweite Fahrzeug (11) in drahtloser Kommunikation mit der Vorrichtung verbunden sind, wobei das erste Fahrzeug und das zweite Fahrzeug jeweils Mittel (22) zum Lesen von Daten umfassen, die auf mindestens einem Funketikett (23) gespeichert sind.

## Claims

1. Method for digitally controlling the delivery of an object from a first receipt (10) to a second vehicle (11), said method being implemented by a device remote from said first and second vehicles, said method comprising the steps of:
- receipt (41) of first data representative of the identification of said first vehicle (10), of second data representative of said object and of third data comprising a first piece of information representative of the geolocation of said first vehicle (10) and a second piece of information representative of a time instant at which said object is removed from said first vehicle (10), said second data being obtained from a radio label (23) associated with said object by a first device (22) on board said first vehicle (10) and configured to read said second data stored on said radio label during the exit of said first object (10);
- receipt (42) of a third piece of information representing the geolocation of said second vehicle (11);
- receipt (43) of a fourth piece of data transmitted by a first mobile communicating device (25) associated with said first vehicle (10), said fourth piece of data being representative of an image of a number plate of the second vehicle (11);
- authentication (44) of the first mobile communicating device (25) and of an delivery carrying out the reference;
- comparing (45) said first data, said second data, said third and/or said fourth data with a set of operator data and comparing said first piece of information with said third piece of information;
and when the first mobile communicating device and the reference are authenticated, said first, second, third and/or fourth data are in accordance with said transmission said first piece of information corresponds to said third piece of information:
- receipt (46) of a first request for remote unlocking of said second vehicle (11); and
- load (47) of fifth data representative of a confirmation of label of said object in said second vehicle (11), said fifth data being obtained from a reading of said second data of said radio label (23) by a second device (22) on board said second vehicle (11) and configured to read said second data stored on said radio load (23) during of said object in said second vehicle (11).

2. Method according to claim 1, wherein said first request for remote unlocking of said second vehicle (11) is transmitted to said second vehicle (11).

3. Method according to claim 1, wherein said first remote unlocking request of said second vehicle (11) is transmitted to a second mobile communication device (25) associated with said second vehicle (11), said second vehicle being unlocked by transmission of a second unlocking request to said second vehicle (11).

4. Method according to any one of claims 1 to 3, further comprising a step of updating a list of objects carried on board said first vehicle (10) on the basis of said second data received.

5. Method according to any one of claims 1 to 4, further comprising a step of determining a confidence index associated with the delivery of said object from said first vehicle (10) to said second vehicle (11).

6. Method according to any one of claims 1 to 5, further comprising unlocking said second vehicle (11) for a determined period of time.

7. Computer plan comprising instructions for the implementation of the method according to any one of the previous claims, when these instructions are executed by a processor.

8. Computer-readable recording medium on which a computer plan is recorded comprising instructions for executing the steps of the method according to one of claims 1 to 6.

9. Device (3) for numerical controls of delivery of an object from a first vehicle to a second vehicle, said device (3) comprising a memory (31) associated with at least one processor (30) configured for implementing the steps of the method according to any one of claims 1 to 6.

10. System for numerically controlling the delivery of an object from a first vehicle to a second vehicle, said system comprising the device according to claim 9, said first vehicle (10) and said second vehicle (11) being connected in wireless communication with said device, said first vehicle and said second vehicle each comprising means (22) for reading data stored on at least one radio label (23).
